# EUROPÄISCHE PATENTSCHRIFT

(11) **EP 3 277 517 B1**
(45) Veröffentlichungstag und Bekanntmachung des Hinweises auf die Patenterteilung: **13.03.2019**
(21) Anmeldenummer: 16713427.9
(22) Anmeldetag: 31.03.2016
(51) Int. Cl.: B42D 25/45

(54) **VERFAHREN UND VORRICHTUNG ZUR POSITIONIERUNG ZUMINDEST EINER EINZELLAGE SOWIE VERFAHREN UND VORRICHTUNG ZUR BEREITSTELLUNG EINES EINZELLAGENVERBUNDES**
METHOD AND DEVICE FOR POSITIONING AT LEAST ONE INDIVIDUAL SHEET, AND METHOD AND DEVICE FOR PROVIDING AN INDIVIDUAL SHEET LAMINATE
PROCÉDÉ ET DISPOSITIF POUR POSITIONNER AU MOINS UNE FEUILLE INDIVIDUELLE ET PROCÉDÉ ET DISPOSITIF POUR FOURNIR UN ENSEMBLE DE FEUILLES INDIVIDUELLES

(30) Priorität: 01.04.2015 DE 102015205857
(43) Veröffentlichungstag der Anmeldung: 07.02.2018
(73) Patentinhaber: Bundesdruckerei GmbH, 10969 Berlin (DE)
(72) Erfinder: RADTKE, Patrick, 12437 Berlin (DE); DITTRICH, Harald, 13465 Berlin (DE); LÖWE, Reinhard, 14542 Werder OT Phöben (DE); SEIDEL, Rainer, 13467 Berlin (DE)
(74) Vertreter: Patentanwälte Bressel und Partner mbB
(86) Internationale Anmeldenummer: PCT/EP2016/057002
(87) Internationale Veröffentlichungsnummer: WO 2016/156455

(56) Entgegenhaltungen:
- EP-A1- 2 730 407
- DE-A1-102008 054 813
- DE-A1-102009 007 552

## Beschreibung

Die Erfindung betrifft eine Vorrichtung und ein Verfahren zur Positionierung zumindest einer Einzellage eines Wert- oder Sicherheitsdokuments aus einer Ausgangslage in eine gewünschte Endlage. Weiter betrifft die Erfindung eine Vorrichtung und ein Verfahren zur Bereitstellung eines Einzellagenverbundes aus mindestens zwei Einzellagen.

Es ist bekannt, Wert- oder Sicherheitsdokumente aus mehreren Einzellagen herzustellen, wobei die Einzellagen zu einem Lagenverbund zusammengefügt und dann laminiert werden. Die EP 2 730 407 A1 beschreibt z.B. ein Verfahren zur Herstellung eines mehrlagigen Sicherheitsproduktes, wobei eine erste individualisierte Laminationslage bereitgestellt wird, wobei weiter eine weitere individualisierte Laminationslage bereitgestellt wird, wobei die beiden Laminationslagen auf einen Trägerkörper aufgebracht werden und der somit entstandene Lagenverbund laminiert wird.

Die EP 2 730 407 A1 offenbart ein Verfahren und eine Vorrichtung zur Herstellung eines mehrlagigen Sicherheitsproduktes, insbesondere eines Sicherheitsdokuments.

Die DE 10 2009 007 552 A1 offenbart ein Verfahren zur Herstellung von mehrlagigen Sicherheitsprodukten, bestehend aus zumindest einer Karte und zumindest einer auf zumindest einer Seite der Karte aufgebrachten Polymerfolie, welche als Rollenware bereitgestellt wird und mit zumindest einem Sicherheitsmerkmal versehen ist.

Die DE 10 2008 054 813 A1 offenbart den Oberbegriff des Anspruchs 1, insbesondere eine Vorrichtung zum Ausrichten von Bogen mit die Bogen von einem Bogenstapel vereinzelnden Hubsaugern und die vereinzelten Bogen in einer Förderrichtung zu einer Bogentransporteinheit transportierenden Schleppsaugern, wobei den Hubsaugern und den Schleppsaugern unabhängig voneinander steuerbare Antriebe zugeordnet sind.

Einzellagen zur Herstellung eines Wert- oder Sicherheitsdokuments werden zumeist in Form von Bögen oder in Form einer Rollenware bereitgestellt, die jeweils mehrere Einzellagen umfassen. Zur Herstellung eines Lagenverbunds ist eine zuverlässige Vereinzelung solcher Einzellagen zu gewährleisten. Nach der Vereinzelung einer Einzellage aus einem Bogen oder einer Rollenware ist in der Regel eine lagerichtige Positionierung der Einzellage auf einer Trägerstruktur, einem Trägerkörper oder auf einer weiteren Einzellage zur Herstellung des Lagenverbundes notwendig.

Es ist wünschenswert, Einzellagen bei der Herstellung eines Einzellagenverbundes lagerichtig zueinander oder aufeinander zu positionieren, um einen Produktionsausschuss bei der Herstellung von Wert- oder Sicherheitsdokumenten zu verringern.

Weiter ist bekannt, dass Wert- oder Sicherheitsdokumente verschiedene Formate aufweisen können. So können derartige Dokumente beispielsweise ein sogenanntes ID1-Format oder ein ID3-Format aufweisen. Es ist weiter wünschenswert, Einzellagen zur Herstellung von Wert- oder Sicherheitsdokumenten mit unterschiedlichen Formaten bereitstellen zu können.

Somit stellt sich das technische Problem, eine Vorrichtung und ein Verfahren zur Positionierung zumindest einer Einzellage eines Wert- oder Sicherheitsdokumentes zu schaffen, welche eine hohe Positioniergenauigkeit unter Gewährleistung einer geringen Positionierungszeitdauer ermöglichen. Weiter stellt sich das technische Problem, eine Vorrichtung und ein Verfahren zur Herstellung eines Einzellagenverbundes aus mindestens zwei Einzellagen zu schaffen, die eine möglichst lagerichtige Positionierung der Einzellagen zueinander gewährleisten, während ebenfalls eine Zeitdauer zur Herstellung reduziert wird.

Die Lösung des technischen Problems ergibt sich durch die Gegenstände mit den Merkmalen der Ansprüche 1, 10, 12 und 15. Weitere vorteilhafte Ausgestaltungen der Erfindung ergeben sich aus den Unteransprüchen.

Es ist eine Grundidee der Erfindung, ein Positionierungsmodul zu schaffen, welches ein Bestandteil einer Produktionsanlage zur Herstellung von Wert- oder Sicherheitsdokumenten ist und welches eine lagerichtige Positionierung von Einzellagen zur Herstellung eines Einzellagenverbunds ermöglicht, indem vor oder während des Transports einer Einzellage von einer Ausgangsraumlage in eine gewünschte Endraumlage eine Abweichung einer aktuellen Raumlage von einer korrespondierenden Soll-Raumlage bestimmt und diese Abweichung während des Transports reduziert wird, vorzugsweise vollständig. Eine korrespondierende Soll-Raumlage kann hierbei eine gewünschte Raumlage der Einzellage bezeichnen, die diese an der aktuellen Position entlang einer gewünschten Transporttrajektorie aufweisen sollte.

Die Produktionsanlage kann hierbei neben dem Bereitstellungsmodul noch weitere funktionelle Module umfassen, die die Prozessschritte ausführen können, die zur Herstellung eines Wert- oder Sicherheitsdokuments erforderlich sind. Weiter kann die Produktionsanlage eine oder mehrere Transportvorrichtung(en) umfassen, die einen Transport der Bestandteile bzw. des Wert- oder Sicherheitsdokuments in verschiedenen Herstellungszuständen zwischen den Modulen ermöglicht. Die gesamte Produktionsanlage kann hierbei in vorteilhafter Weise im Vergleich mit bisher existierenden Fertigungsstraßen sehr geringe geometrische Dimensionen aufweisen. Vorgeschlagen wird eine Vorrichtung zur Positionierung zumindest einer Einzellage eines Wert- oder Sicherheitsdokuments. Die Einzellage bezeichnet hierbei insbesondere einen einzelnen Körper, der aus einem laminierfähigen Material besteht und genau ein Nutzen zur Herstellung des Wert- oder Sicherheitsdokuments umfasst oder beinhaltet. Hierbei kann das Einzelnutzen ein gewünschtes Endformat, insbesondere eine gewünschte Breite und Länge, des herzustellenden Wert- oder Sicherheitsdokuments aufweisen. Das gewünschte Format kann vorzugsweise ein ID1-Format oder ein ID3-Format sein. Selbstverständlich sind jedoch auch andere Formate, beispielsweise ein ID2-Format vorstellbar. Die bereitzustellende Einzellage kann hierbei größere Dimensionen als die Dimensionen des Einzelnutzens aufweisen. Insbesondere kann die bereitzustellende Einzellage eine größere Breite und/oder eine größere Länge als das entsprechende Einzelnutzen aufweisen. Folgend bezeichnet eine Einzellage mit einem Format eine Einzellage, die einen Einzelnutzen mit diesem Format umfasst oder bildet. Insbesondere bezeichnet die ID1-Einzellage eine Einzellage, die ein Einzelnutzen mit ID1-Format umfasst oder bildet. Eine ID3-Einzellage bezeichnet eine Einzellage, die ein Einzelnutzen mit ID3-Format umfasst oder bildet.

Die Vorrichtung umfasst mindestens eine Transporteinrichtung zum Transport der mindestens einen Einzellage aus einer Ausgangsraumlage in eine Endraumlage. Diese kann auch als Einzellagen-Transporteinrichtung bezeichnet werden. Im Sinne dieser Erfindung bezeichnet eine Raumlage eine Position und eine Ausrichtung der Einzellage. Die Raumlage kann hierbei insbesondere in einem globalen Referenzkoordinatensystem definiert sein. Eine Position kann insbesondere als Position eines geometrischen Mittelpunkts der Einzellage beschrieben werden. Eine Orientierung kann z.B. gemäß einer Roll-, Gier-, Nickwinkel-Konvention beschrieben werden, wobei sich diese auf Achsen des Referenzkoordinatensystems beziehen können.

Bevorzugt kann die Einzellage mindestens eine, vorzugsweise mehrere, Positionsmarke(n) aufweisen. Die Positionsmarke kann insbesondere zur optischen Bestimmung der Raumlage der Einzellage dienen. Beispielsweise kann eine solche Positionsmarke einen Kreis und/oder ein Kreuz und/oder andere zur zuverlässigen optischen Erfassung geeignete geometrische Figuren oder Formen aufweisen.

Die Ausgangsraumlage ist von der Endraumlage verschieden. In der Ausgangsraumlage kann sich die Einzellage in einem Ausgangsbereich oder Bereitstellungsbereich befinden. Insbesondere kann die Einzellage in der Ausgangsraumlage auf einer Bereitstellungsfläche angeordnet sein. In der Endraumlage kann die Einzellage auf oder über einem Trägerelement oder auf oder über einer weiteren Einzellage angeordnet sein. Dies wird nachfolgend noch näher erläutert.

Weiter umfasst die Vorrichtung mindestens eine Lageerfassungseinrichtung zur Erfassung einer Ist-Ausgangsraumlage. Alternativ oder kumulativ umfasst die Vorrichtung mindestens eine Lageerfassungseinrichtung zur Erfassung mindestens einer Ist-Transportraumlage der mindestens einen Einzellage. Selbstverständlich ist es vorstellbar, dass durch die Lageerfassungseinrichtung sowohl die Ist-Ausgangsraumlage als auch die Ist-Transportraumlage erfassbar ist. Die Ist-Ausgangsraumlage bezeichnet die Raumlage der Einzellage im vorhergehend erläuterten Bereitstellungsbereich, insbesondere auf der vorhergehend erläuterten Bereitstellungsfläche. Die Ist-Transportraumlage bezeichnet die Raumlage der Einzellage während des Transports der Einzellage. Die Ist-Transportraumlage kann insbesondere eine Raumlage zwischen der Ausgangsraumlage und der Endraumlage bezeichnen, insbesondere eine Raumlage entlang einer gewünschten Transporttrajektorie.

Selbstverständlich kann die die Vorrichtung mehr als eine Lageerfassungseinrichtung umfassen, wobei mittels jeder der Lageerfassungseinrichtungen jeweils voneinander verschiedene Ist-Transportraumlagen erfassbar sind. Somit können verschiedene Lageerfassungseinrichtungen räumlich verschiedene Erfassungsbereiche aufweisen.

Insbesondere kann durch eine Lageerfassungseinrichtung die Ist-Ausgangsraumlage und durch eine weitere Lageerfassungseinrichtung eine Ist-Endraumlage erfassbar sein.

Die Lageerfassungseinrichtung(en) kann/können hierbei ortsfest bezüglich des Referenzkoordinatensystems angeordnet sein. Alternativ oder kumulativ kann mindestens eine Lageerfassungseinrichtung in oder an einem beweglichen Teil der Transporteinrichtung angeordnet.

Weiter umfasst die Vorrichtung mindestens eine Auswerte- und Steuereinrichtung, wobei mittels der Auswerte- und Steuereinrichtung eine Abweichung der Ist-Ausgangsraumlage von einer Soll-Ausgangsraumlage bestimmbar ist. Die Soll-Ausgangsraumlage kann hierbei eine vordefinierte Raumlage sein. Die Soll-Ausgangsraumlage kann insbesondere eine gewünschte Raumlage für die Einzellage im Bereitstellungsbereich bezeichnen.

Alternativ oder kumulativ ist mittels der Auswerte- und Steuereinrichtung eine Abweichung der mindestens einen Ist-Transportraumlage von einer korrespondierenden Soll-Transportraumlage bestimmbar. Die korrespondierende Soll-Transportraumlage kann insbesondere eine gewünschte Raumlage an einem Punkt oder in einem Abschnitt der Transporttrajektorie bezeichnen, an/in dem sich die Einzellage oder die Transporteinrichtung zum aktuellen Zeitpunkt befinden sollte. Die gewünschte Raumlage an einem Punkt oder Abschnitt der Transporttrajektorie kann insbesondere eine Raumlage entlang einer festgelegten Trajektorie einer Transportbewegung sein.

Auch kann die korrespondierende Soll-Transportraumlage eine gewünschte Raumlage an einer Position der Transporttrajektorie sein, der den geringsten räumlichen Abstand zur aktuellen räumlichen Position der Einzellage bzw. der Transporteinrichtung aufweist.

Auch kann eine aktuelle Position der Transporteinrichtung, insbesondere eines beweglichen Teils der Transporteinrichtung, bestimmt oder erfasst werden. Jeder dieser aktuellen Positionen kann eine Soll-Transportraumlage der Einzellage zugeordnet sein, wobei die korrespondierende Soll-Transportraumlage somit als die Raumlage bestimmt wird, die der aktuell erfassten oder bestimmten Position der Transporteinrichtung zugeordnet ist.

Eine Transporttrajektorie kann vor dem Transport bestimmt werden, beispielsweise durch die Steuer- und Auswerteeinrichtung. Insbesondere kann die Transporttrajektorie in Abhängigkeit einer Ist-Ausgangslage der Einzellage bestimmt werden. Auch können zu jeder Position der derart bestimmten Transporttrajektorie auch gewünschte Soll-Transportraumlagen bestimmt werden.

Die Lageerfassung kann somit zeitlich vor oder zeitlich während des Transportes erfolgen. Insbesondere kann die Lageerfassung erfolgen, wenn die Einzellage mechanisch mit der Transporteinrichtung verbunden, also durch die Transporteinrichtung betätigt oder gegriffen, ist.

Die Transporteinrichtung kann insbesondere einen beweglichen und einen unbeweglichen Teil umfassen. Weiter kann die Transporteinrichtung Führungseinrichtungen zur Bewegungsführung des beweglichen Teils umfassen.

Es ist vorstellbar, dass ausschließlich die Ausgangsraumlage der Einzellage erfassbar ist. Alternativ ist es vorstellbar, dass die Erfassung einer Ist-Transportlage ausschließlich in einem oder mehreren ausgewählten räumlichen Bereichen möglich ist, durch die die Einzellage beim Transport aus der Ausgangsraumlage in die Endraumlage transportiert wird.

Weiter ist mittels der Auswerte- und Steuereinrichtung die mindestens eine Transporteinrichtung derart steuerbar, dass die Abweichung der Ist-Ausgangsraumlage von der Soll-Ausgangsraumlage und/oder die Abweichung der Ist-Transportraumlage von der Soll-Transportraumlage verringert oder minimiert wird, vorzugsweise vollständig eliminiert wird.

Hierbei wird durch die Transporteinrichtung die Abweichung zeitlich vor oder zeitlich während des Transportes in die Endraumlage reduziert. Hierbei ist zu beachten, dass die Abweichung der Ist-Ausgangsraumlage von der Soll-Ausgangsraumlage bzw. die Abweichung der Ist-Transportraumlage von der Soll-Transportraumlage nicht die Abweichung der Ist-Raumlage der Einzellage von der Soll-Endraumlage bezeichnet. Somit kann durch die Transporteinrichtung eine Transportbewegung als auch eine Korrekturbewegung durchgeführt werden, wobei die Korrekturbewegung eine Bewegung zur Reduktion der Abweichung ist. Die Transportbewegung bezeichnet im Gegensatz dazu die zum Transport von der Ausgangsraumlage in die Endraumlage erforderliche Bewegung. Die Transportbewegung kann insbesondere eine Bewegung sein, durch die eine Einzellage aus der Soll-Ausgangsraumlage in die Soll-Endraumlage transportierbar ist, insbesondere wenn während des Transports keine unerwünschten Lageänderungen der Einzellage auftreten. Nach Abschluss bzw. bei Beendigung der Transportbewegung bzw. der aus Transport- und Korrekturbewegung resultierenden Bewegung kann sich die Einzellage in der Soll-Endraumlage befinden bzw. eine Abweichung zwischen Soll-Endraumlage und Ist-Endraumlage minimiert sein. Hierbei kann die Einzellage in der Soll- bzw. Ist-Endraumlage mechanisch festgelegt bzw. fixiert werden.

Die Transportbewegung kann eine festgelegte Bewegungstrajektorie aufweisen. So können mehrere Einzellagen in mehreren Transportvorgängen zeitlich nacheinander von der Ausgangsraumlage in die Endraumlage transportiert werden. Die festgelegte Bewegungstrajektorie der Transportbewegung kann hierbei für jeden Transportvorgang gleich und somit konstant sein, während eine Bewegungstrajektorie der Korrekturbewegung in jedem Transportvorgang veränderbar ist oder verändert wird.

Hierbei kann die Korrekturbewegung in Abhängigkeit der Abweichung der Ist-Ausgangsraumlage von der Soll-Ausgangsraumlage und/oder der Abweichung der Ist-Transportraumlage von der Soll-Transportraumlage für jeden Transportvorgang neu bestimmt werden. Insbesondere wird die Korrekturbewegung derart bestimmt, dass die Abweichung der Ist-Ausgangsraumlage von der Soll-Ausgangsraumlage und/oder die Abweichung der Ist-Transportraumlage von der Soll-Transportraumlage verringert oder minimiert wird, vorzugsweise vollständig eliminiert wird. Somit kann die Soll-Transportraumlage auch eine Lage entlang der festgelegten Bewegungstrajektorie der Transportbewegung sein.

Eine resultierende Bewegung umfasst somit sowohl die Transport- als auch die Korrekturbewegung. Die resultierende Bewegung kann entlang der erläuterten Transporttrajektorie durchgeführt werden, wobei die Transporttrajektorie sich aus der festgelegten Trajektorie der Transportbewegung und der veränderbaren Trajektorie der Korrekturbewegung ergeben kann, insbesondere aus deren Überlagerung. Die Korrekturbewegung kann hierbei zeitlich vor der Transportbewegung ausgeführt werden. Vorzugsweise wird die Korrekturbewegung zumindest zeitweise gleichzeitig zur Transportbewegung ausgeführt. Hierbei kann die Korrekturbewegung der Transportbewegung überlagert werden.

Mit anderen Worten kann mittels der Auswerte- und Steuereinrichtung die mindestens eine Transporteinrichtung derart steuerbar sein, dass diese die Transportbewegung mit der festgelegten Trajektorie ausführt, wobei die Transporteinrichtung zusätzlich die Korrekturbewegung mit der veränderbaren Trajektorie ausführt.

Insgesamt ergibt sich in vorteilhafter Weise eine zeitlich schnelle und räumlich genaue Positionierung der Einzellage. Eine maximale Abweichung von der Position in der Endraumlage kann beispielsweise kleiner als 1/10 mm sein.

Weiter ist durch die mindestens eine Transporteinrichtung eine Veränderung der Position der Einzellage durchführbar. Erfindungsgemäß ist die Position der Einzellage entlang drei rechtwinklig zueinander orientierten Raumrichtungen veränderbar. Insbesondere kann die Position entlang der durch das vorhergehend erläuterte Referenzkoordinatensystem festgelegten Raumrichtungen verändert werden. Somit kann eine Korrektur-Translationsbewegung von der Transporteinrichtung durchgeführt werden.

Beispielsweise kann die Transporteinrichtung mindestens einen Schlitten oder Läufer umfassen, dessen Translationsbewegung durch entsprechende Führungseinrichtungen, beispielsweise Führungsschienen, geführt wird.

Zusätzlich zu dieser Translationsbewegung ist durch die Transporteinrichtung eine Rotationsbewegung um mindestens eine Rotationsachse durchführbar. Diese kann auch als Korrektur-Rotationsbewegung bezeichnet werden. Die Rotationsachse kann hierbei insbesondere parallel zu einer der vorhergehend erläuterten Raumrichtungen orientiert sein. Selbstverständlich ist es auch möglich, dass die Transporteinrichtung eine Rotationsbewegung um mehrere, linear unabhängige Rotationsachsen durchführen kann. Bevorzugt ist durch die Transporteinrichtung jedoch eine Rotationsbewegung nur um eine Rotationsachse, die parallel zu einer Vertikalachse des Referenzkoordinatensystems orientiert ist, durchführbar.

Die Transporteinrichtung kann eine Greifereinrichtung umfassen, insbesondere eine als Vakuum-Greifereinrichtung oder Sauggreifereinrichtung ausgebildete Greifereinrichtung. Diese kann an dem vorhergehend erläuterten beweglichen Teil der Transporteinrichtung befestigt sein. Es ist möglich, dass der gesamte bewegliche Teil oder nur die Greifereinrichtung die Rotationsbewegung durchführt.

Insgesamt ergibt sich in vorteilhafter Weise durch die durchführbare Korrektur-Translationsbewegung und Korrektur-Rotationsbewegung, dass eine Positioniergenauigkeit sowohl in Bezug auf eine räumliche Position als auch auf eine räumliche Orientierung erhöht wird.

In einer weiteren Ausführungsform ist die mindestens eine Lageerfassungseinrichtung eine optische Lageerfassungseinrichtung. Insbesondere kann die Lageerfassungseinrichtung eine Bilderfassungseinrichtung umfassen. Selbstverständlich kann die mindestens eine Lageerfassungseinrichtung jedoch auch andere optische Sensoren, beispielsweise Lasersensoren, umfassen. Die Lageerfassungseinrichtung kann auch eine Stereobilderfassungseinrichtung umfassen.

Der optischen Erfassungseinrichtung kann ein Erfassungsbereich zugeordnet sein. Weiter kann mittels der Lageerfassungseinrichtung ein in dem Erfassungsbereich angeordnetes Objekt, insbesondere die Einzellage, detektiert und dann deren Raumlage bestimmt werden. Die Raumlage kann hierbei in einem ersten Schritt in einem Koordinatensystem der Lageerfassungseinrichtung bestimmt und dann in das vorhergehend erläuterte Referenzkoordinatensystem umgerechnet, d.h. transformiert, werden. Hierbei kann eine räumliche Beziehung zwischen dem Koordinatensystem der Lageerfassungseinrichtung und dem Referenzkoordinatensystem vorbekannt oder bestimmbar sein, insbesondere mittels geeigneter Kalibrierungsverfahren. Zur Detektion und Bestimmung der Raumlage können geeignete Verfahren der Bildverarbeitung, insbesondere sogenannte Objektdetektionsverfahren, Segmentierungsverfahren usw., verwendet werden. Diese sind dem Fachmann bekannt.

Umfasst die Einzellage eine Positionsmarke, so kann diese Positionsmarke mittels der Lageerfassungseinrichtung detektiert werden. Hierzu können beispielsweise geeignete Mustererkennungsverfahren angewendet werden.

Die Lageerfassungseinrichtung, insbesondere die optische Erfassungseinrichtung der Lageerfassungseinrichtung, kann ortsfest bezüglich des Referenzkoordinatensystems angeordnet sein. Alternativ ist vorstellbar, dass die Lageerfassungseinrichtung bewegbar ist, insbesondere aktorgestützt. Ist die Lageerfassungseinrichtung ortsfest angeordnet, so kann die Ist-Raumlage der Einzellage nur in einem ortsfesten Erfassungsbereich der Lageerfassungseinrichtung bestimmt werden. Ist jedoch die Lageerfassungseinrichtung bewegbar, so erhöht sich die Größe des Raumbereichs, in dem die Ist-Raumlage der Einzellage erfasst werden kann.

Die Verwendung einer optischen Lageerfassungseinrichtung ermöglicht in vorteilhafter Weise eine ausreichend genaue und zuverlässige Erfassung der Raumlage.

Es ist vorstellbar, dass ein Teil der Lageerfassungseinrichtung, beispielsweise ein Auswerteteil, in der Steuer- und Auswerteeinrichtung der Vorrichtung integriert ist.

In einer weiteren Ausführungsform ist zumindest ein Teil der mindestens einen Lageerfassungseinrichtung in oder an einem beweglichen Teil der Transporteinrichtung angeordnet. Insbesondere kann eine optische Erfassungseinrichtung, beispielsweise die Bilderfassungseinrichtung, in oder an dem beweglichen Teil angeordnet sein. Mittels einer solchen Lageerfassungseinrichtung kann die Raumlage der Einzellage in einem Koordinatensystem bestimmt werden, welches ortsfest relativ zum beweglichen Teil ist. Zur Umrechnung (Transformation) der Raumlage in das Referenzkoordinatensystem ist somit die Kenntnis der Raumlage des beweglichen Teils notwendig. Diese kann beispielsweise über mindestens eine geeignete Lagebestimmungseinrichtung bestimmt werden. Es ergibt sich jedoch in vorteilhafter Weise, dass die Ist-Raumlage der Einzellage während der gesamten Transportbewegung erfasst und korrigiert werden kann.

In einer weiteren Ausführungsform umfasst die Vorrichtung mindestens eine Verbund-Transporteinrichtung zum Transport der mindestens einen Einzellage nach der Positionierung in der Endraumlage. Die Verbund-Transporteinrichtung bezeichnet hierbei eine von der Einzellagen-Transporteinrichtung verschiedene Transporteinrichtung. Die Verbund-Transporteinrichtung kann insbesondere auch als Werkstück-Transporteinrichtung bezeichnet werden. Die Verbund-Transporteinrichtung kann insbesondere nur eine Translationsbewegung entlang genau einer oder mehrerer Raumrichtungen des Referenzkoordinatensystems ermöglichen. Somit kann durch die Einzellagen-Transporteinrichtung die Einzellage auf der Verbund-Transporteinrichtung platziert werden, wobei diese die Einzellage dann durch diese weiter transportiert wird. Insbesondere kann somit die Einzellage weiteren Prozessschritten zugeführt werden. Die Verbund-Transporteinrichtung ist hierbei eine Transporteinrichtung für einen Einzellagenverbund aus mehreren Einzellagen, die jeweils von entsprechenden Transporteinrichtungen auf der Verbund-Transporteinrichtung bzw. aufeinander angeordnet werden.

Die Endraumlage für die Einzellage kann durch eine vorbestimmte Raumlage der Verbund-Transporteinrichtung festgelegt sein, die auch als Aufnahme-Raumlage bezeichnet werden kann. Diese bezeichnet eine Raumlage in der sowohl die Ausgangsraumlage als auch die durch die Raumlage festgelegte Endraumlage im Arbeitsraum der Einzellagen-Transporteinrichtung liegen. Somit kann die Einzellage in der Endraumlage auf oder an oder in der Verbund-Transporteinrichtung angeordnet sein.

Es ist möglich, dass die Verbund-Transporteinrichtung in eine, vorzugsweise jedoch in mehrere, Aufnahme-Raumlagen bewegbar ist, in denen jeweils eine Einzellage auf oder in der Verbund-Transporteinrichtung bzw. eines auf der Verbund-Transporteinrichtung bereits angeordneten Einzellagenverbundes angeordnet werden kann. Dies kann durch Einzellagen-Transporteinrichtungen verschiedener erfindungsgemäßer Vorrichtungen zur Positionierung erfolgen, die in Transportrichtung der Verbund-Transporteinrichtung hintereinander angeordnet sind.

Die Verbund-Transporteinrichtung kann den Transport einer Einzellage bzw. eines Einzellagenverbunds mit verschiedenen Formaten, insbesondere mit dem vorhergehend erläuterten ersten Format und dem vorhergehend erläuterten weiteren Format, ermöglichen.

Die Verbund-Transporteinrichtung kann insbesondere ein Transportband umfassen, welches eine Translationsbewegung durchführen kann. Das Transportband kann insbesondere ein Endlosband sein.

Hierdurch ergibt sich in vorteilhafter Weise eine einfache Herstellung eines Einzellagenverbundes. Insbesondere kann mittels der Verbund-Transporteinrichtung eine Einzellage bzw. ein bereits bestehender Einzellagenverbund in eine weitere Aufnahme-Raumlage bewegt werden, in der dann eine weitere Einzellage auf der Einzellage bzw. dem Einzellagenverbund angeordnet wird.

In einer weiteren Ausführungsform umfasst die Verbund-Transporteinrichtung mindestens ein Trägerelement, wobei die mindestens eine Einzellage in der Endraumlage auf, an oder in dem mindestens einen Trägerelement anordenbar ist. Das Trägerelement kann somit zum Anordnen oder Haltern der mindestens einen Einzellage in der Endraumlage dienen. Das Trägerelement kann insbesondere eine Ablagefläche aufweisen oder ausbilden. Die Ablagefläche kann eine ebene Fläche sein. Die Verbund-Transporteinrichtung kann z.B. einen beweglichen Teil umfassen, an dem das mindestens eine Trägerelement angeordnet ist oder der als bewegliches Teil ausgebildet ist. Z.B. kann das Trägerelement an dem Transportband befestigt sein. Das Trägerelement kann das Anordnen bzw. Ablegen der Einzellage in einer gewünschten Endraumlage, also insbesondere mit einer gewünschten Position und Ausrichtung, ermöglichen.

Das Trägerelement kann zum Anordnen bzw. Ablegen von Einzellagen mit unterschiedlichen Formaten, insbesondere von einer Einzellage mit einem ersten Format und einer Einzellage mit einem weiteren Format, ermöglichen.

So kann beispielsweise in einem ersten Ablagebereich des Trägerelements eine Einzellage mit dem ersten Format und in einem weiteren Ablagebereich eine Einzellage mit dem weiteren Format angeordnet werden. Der erste Ablagebereich kann hierbei den weiteren Ablagebereich räumlich umfassen (oder umgekehrt). Selbstverständlich können die Ablagebereiche auch räumlich vollständig voneinander getrennt oder zumindest teilweise überlappend angeordnet sein.

Hierdurch ergibt sich in vorteilhafter Weise, dass Wert- oder Sicherheitsdokumente mit unterschiedlichen Formaten in einer flexiblen Reihenfolge hergestellt werden können. Beispielsweise kann auf einem ersten Trägerelement der Verbund-Transporteinrichtung ein Einzellagenverbund mit Einzellagen eines ersten Formates angeordnet werden, während auf einem weiteren Trägerelement ein Einzellagenverbund aus Einzellagen mit dem weiteren Format angeordnet wird. Trägerelemente können insbesondere in Transportrichtung der Verbund-Transporteinrichtung unmittelbar aufeinanderfolgende Trägerelemente sein.

In einer weiteren Ausführungsform umfasst die Verbund-Transporteinrichtung und/oder das Trägerelement mindestens ein Befestigungsmittel zur Festlegung der Einzellage in deren Endraumlage. Die Festlegung kann eine mechanische Fixierung bezeichnen. Somit kann die Einzellage in der Endraumlage mechanisch festgelegt werden. Dies wiederum bedeutet, dass sich die Raumlage der Einzellage relativ zu der Verbund-Transporteinrichtung bzw. relativ zum Trägerelement ortsfest ist.

Das Befestigungsmittel kann z.B. als Befestigungsdorn oder Befestigungsnadel ausgebildet sein oder mehrere solche Befestigungsdornen oder -nadeln umfassen. Selbstverständlich können auch andere Befestigungsmittel zur mechanischen Befestigung der Einzellage vorgesehen sein. Diese können insbesondere eine form- und/oder kraft- und/oder reibschlüssige Verbindung der Einzellage mit der Verbund-Transporteinrichtung bzw. dem Trägerelement ermöglichen.

Ein Befestigungsmittel kann hierbei sowohl zur Festlegung einer Einzellage mit dem ersten Format als auch zur Festlegung einer Einzellage mit einem weiteren Format dienen. Selbstverständlich können jedoch auch voneinander verschiedene Befestigungsmittel vorgesehen sein, die jeweils entweder die Festlegung einer Einzellage mit dem ersten Format oder eine Festlegung einer Einzellage mit dem weiteren Format ermöglichen. Somit können die Befestigungselemente zur Befestigung von Einzellagen mit verschiedenen Formaten in verschiedenen Bereichen des Trägerelements angeordnet sein. Hierdurch wird in vorteilhafter Weise die dauerhafte lagerichtige Anordnung von mehreren Einzellagen in einem Einzellagenverbund gewährleistet, da bereits auf, an oder in der Verbund-Transporteinrichtung angeordnete Einzellagen mechanisch festgelegt sind.

In einer weiteren Ausführungsform umfasst die Vorrichtung mindestens eine Bereitstellungseinrichtung zur Bereitstellung der mindestens einen Einzellage in der Ausgangsraumlage. Diese kann auch als sogenannte Übergabeeinrichtung bezeichnet werden. Die Bereitstellungseinrichtung kann Einzellagen mit verschiedenen Formaten bereitstellen, insbesondere in entsprechenden Bereitstellungsbereichen. Beispielsweise kann die Bereitstellungseinrichtung eine Einzellage mit dem ersten Format als auch eine Einzellage mit dem weiteren Format bereitstellen. Die Bereitstellungseinrichtung kann hierbei mechanisch an der vorgeschlagenen Vorrichtung zur Positionierung, insbesondere an der Verbund-Transporteinrichtung, befestigt sein.

Die Bereitstellungseinrichtung kann eine Einrichtung zur Bereitstellung zumindest einer Einzellage eines Wert- oder Sicherheitsdokuments sein, wobei die Bereitstellungseinrichtung mindestens eine erste Aufnahmeeinrichtung für mindestens eine Einzellage mit einem ersten Format umfasst. Weiter umfasst die Bereitstellungseinrichtung mindestens eine erste Halteeinrichtung für ein erstes Einzellagenband umfasst. Weiter umfasst die Bereitstellungseinrichtung mindestens eine erste Vereinzelungseinrichtung zur Vereinzelung einer Einzellage mit dem ersten Format aus dem ersten Einzellagenband. Weiter umfasst die Vorrichtung mindestens eine erste Transporteinrichtung zum Transport der mindestens einen Einzellage aus einem ersten Einzellagen-Aufnahmebereich in einen ersten Bereitstellungsbereich und/oder zum Transport eines freien Endabschnitts oder einer aus dem ersten Einzellagenband vereinzelten Einzellage aus einem ersten Ablagebereich in den ersten Bereitstellungsbereich.

Weiter kann die Bereitstellungseinrichtung mindestens eine weitere Aufnahmeeinrichtung für mindestens eine Einzellage mit einem weiteren Format umfassen, wobei die Bereitstellungseinrichtung mindestens eine weitere Halteeinrichtung für ein weiteres Einzellagenband umfasst. Weiter kann die mindestens erste Transporteinrichtung eine Transporteinrichtung sowohl zum Transport der mindestens einen Einzellage aus dem ersten Aufnahmebereich als auch zum Transport des freien Endabschnitts oder der aus dem ersten Einzellagenband vereinzelten Einzellage aus dem ersten Ablagebereich in den ersten Bereitstellungsbereich sein. Weiter kann die erste Transporteinrichtung oder eine weitere Transporteinrichtung eine Transporteinrichtung zum Transport der mindestens einen Einzellage aus dem weiteren Einzellagen-Aufnahmebereich in den weiteren Bereitstellungsbereich und/oder zum Transport des freien Endabschnitts oder der aus dem ersten Einzellagenband vereinzelten Einzellage aus dem weiteren Ablagebereich in den weiteren Bereitstellungsbereich sein. Weiter kann die erste Vereinzelungseinrichtung eine Vereinzelungseinrichtung zur Vereinzelung sowohl einer Einzellage mit dem ersten Format aus dem ersten Einzellagenband als auch einer Einzellage mit dem weiteren Format aus dem weiteren Einzellagenband sein.

Hierdurch ergibt sich in vorteilhafter Weise eine vereinfachte Herstellung von Einzellagenverbunden mit unterschiedlichen Formaten, da die zu integrierenden Einzellagen in einer gewünschten Auslage bereitgestellt werden.

In einer weiteren Ausführungsform umfasst die Vorrichtung mindestens ein Mittel zum Ausbilden mindestens eines Festlegungsmittels oder -elements an der mindestens einen Einzellage zur Festlegung der Einzellage in der Endraumlage. Das Festlegungsmittel kann hierbei zur Wechselwirkung mit dem vorhergehend erläuterten Befestigungsmittel vorgesehen sein, um die Einzellage in der Endraumlage festzulegen. Ist das Befestigungsmittel z.B. als Befestigungsdorn ausgebildet oder umfasst einen solchen, so kann das Festlegungsmittel der Einzellage beispielsweise als Durchgangsöffnung in der Einzellage ausgebildet sein. In diesem Fall kann das Mittel zum Ausbilden des Festlegungsmittels beispielsweise eine Stanzeinrichtung sein.

Hierbei kann das Mittel zum Ausbilden des mindestens einen Festlegungsmittels derart angeordnet sein, dass das Festlegungsmittel in der Ausgangslage der Einzellage oder in einer Ist-Transportlage der Einzellage in der Einzellage ausgebildet werden kann.

Beispielsweise ist es möglich, die Einzellage in der Ausgangslage zu stanzen. Auch kann die Einzellage während des Transports gestanzt werden.

Die Lageerfassung der Einzellage kann hierbei zeitlich vor dem Ausbilden des mindestens einen Festlegungsmittels erfolgen. In diesem Fall können diese Festlegungsmittel derart an oder in der Einzellage ausgebildet und/oder angeordnet werden, dass diese Einzellage in einer gewünschten Raumlage relativ zu der Verbund-Transporteinrichtung bzw. zu dem Trägerelement mit dem mindestens einen Befestigungsmittel festgelegt werden kann. Hierdurch ergibt sich in vorteilhafter Weise eine vereinfachte räumliche Festlegung der Einzellage in der Endraumlage.

Weiter vorgeschlagen wird eine Vorrichtung zur Bereitstellung eines Einzellagenverbundes aus mindestens zwei Einzellagen. Die Vorrichtung zur Bereitstellung umfasst eine erste Vorrichtung zur Positionierung gemäß einer der in dieser Erfindung beschriebenen Ausführungsformen. Weiter umfasst die Vorrichtung zur Bereitstellung mindestens eine, vorzugsweise jedoch mehrere, weitere Vorrichtung(en) entsprechend einer in dieser Erfindung beschriebenen Ausführungsformen. Die mindestens eine weitere Vorrichtung zur Positionierung ist entlang einer Transportrichtung des Einzellagenverbundes nach der ersten Vorrichtung zur Positionierung angeordnet. Die Transportrichtung des Einzellagenverbundes kann der Transportrichtung der vorhergehend erläuterten Verbund-Transporteinrichtung entsprechen. Die Verbund-Transporteinrichtung kann eine gemeinsame Transporteinrichtung sein. Dies bedeutet, dass die Verbund-Transporteinrichtung sowohl die Verbund-Transporteinrichtung der ersten Vorrichtung zur Positionierung als auch die Verbund-Transporteinrichtung der mindestens einen weiteren Vorrichtung zur Positionierung ausbildet. Diese gemeinsame Verbund-Transporteinrichtung kann hierbei mehrere Trägerelemente umfassen, wobei auf einem ersten Trägerelement mittels der ersten Vorrichtung zur Positionierung eine Einzellage in der Endraumlage anordenbar ist. Weiter kann, insbesondere gleichzeitig, durch die weitere Vorrichtung zur Positionierung eine Einzellage auf einem weiteren Trägerelement der gemeinsamen Transporteinrichtung angeordnet werden. Hiernach kann die Transporteinrichtung, insbesondere deren beweglicher Teil, derart bewegt werden, dass das erste Trägerelement in eine Raumlage bewegt wird, in der durch die weitere Vorrichtung zur Positionierung eine Einzellage auf dem ersten Trägerelement, insbesondere auf der dort bereits angeordneten Einzellage, angeordnet werden kann.

Vorzugsweise umfasst die Vorrichtung zur Bereitstellung eines Einzellagenverbundes bis zu 5, 8 oder 10 oder mehr Vorrichtungen zur Positionierung von Einzellagen.

Insgesamt ermöglicht die vorgeschlagene Vorrichtung in vorteilhafter Weise die Herstellung eines Einzellagenverbundes, bei der mehrere Einzellagen lagerichtig zueinander angeordnet sind. Da durch die Vorrichtungen zur Positionierung Einzellagen mit verschiedenen Formaten in der Endraumlage positioniert werden können, können mittels der Vorrichtung zur Bereitstellung auch Einzellagenverbunde mit verschiedenen Formaten bereitgestellt werden. Insbesondere kann z.B. ein erster Einzellagenverbund mit dem ersten Format und ein weiterer Einzellagenverbund mit dem weiteren Format bereitgestellt werden, wobei der weitere Einzellagenverbund in der Produktionsreihenfolge unmittelbar auf den ersten Einzellagenverbund folgt. So kann beispielsweise auf dem ersten Trägerelement der erste Einzellagenverbund und auf dem weiteren Trägerelement der weitere Einzellagenverbund angeordnet sein.

In einer weiteren Ausführungsform umfasst die Vorrichtung zur Bereitstellung zusätzlich eine Fixierungseinrichtung zur Festlegung der Einzellagen aneinander. Die Fixierungseinrichtung kann beispielsweise eine Verklebeeinrichtung, eine Hefteinrichtung oder eine sonstige Fixierungseinrichtung sein. Beispielsweise können die Einzellagen des Einzellagenverbundes durch die Fixierungseinrichtung über ein sogenanntes UltraschallSchweißen oder Ultraschall-Heften aneinander befestigt werden. Vorzugsweise ist die Fixierungseinrichtung entlang der Transportrichtung nach der letzten Vorrichtung zur Positionierung einer Einzellage angeordnet. Hierdurch ergibt sich in vorteilhafter Weise, dass ein fertig gestellter Einzellagenverbund für nachfolgende Prozessschritte, beispielsweise eine Lamination oder ein Stanzen, mechanisch stabilisiert wird.

Weiter vorgeschlagen wird ein Verfahren zur Positionierung zumindest einer Einzellage eines Wert- oder Sicherheitsdokuments. Das Verfahren ist hierbei mittels einer Vorrichtung zur Positionierung mindestens einer Einzellage gemäß einer in dieser Erfindung beschriebenen Ausführungsform durchführbar.

Hierbei wird mindestens eine Einzellage aus einer Ausgangsraumlage in eine Endraumlage transportiert. Der Transport kann durch eine resultierende Bewegung erfolgen, die, wie vorhergehend erläutert, eine Transportbewegung und eine Korrekturbewegung umfasst.

Weiter wird eine Ist-Ausgangsraumlage und/oder mindestens eine Ist-Transportraumlage der mindestens einen Einzellage erfasst. Weiter wird eine Abweichung der Ist-Ausgangsraumlage von einer Soll-Ausgangsraumlage und/oder eine Abweichung der Ist-Transportraumlage von einer Soll-Transportraumlage bestimmt und verringert, insbesondere minimiert. Die Verringerung der Abweichung kann hierbei durch eine Korrekturbewegung der Einzellage erfolgen.

Weiter können verschiedene Einzellagen, insbesondere verschiedene Einzellagen mit verschiedenen Formaten, in einem getakteten Betrieb aus ihrer jeweiligen Ausgangsraumlage in eine gewünschte Endraumlage transportiert werden. Hierbei kann jedem Format der Einzellagen genau eine gewünschte Endraumlage zugeordnet sein. Auch ist es möglich, dass allen Formaten die gleiche Endraumlage zugeordnet ist. Wie vorhergehend erläutert, kann eine solche Endraumlage insbesondere in Form einer Position eines geometrischen Mittelpunkts der jeweiligen Einzellage und der räumlichen Orientierung der Längsachse gegeben sein.

Eine Taktfrequenz kann hierbei in einem Bereich von 3 Einzellagen pro Minute bis 6 Einzellagen pro Minute liegen. Die Lageerfassung kann insbesondere erst dann erfolgen, wenn die Einzellage mechanisch mit einer Transporteinrichtung verbunden ist.

In der Endraumlage kann die Einzellage auf, an oder in einer Verbund-Transporteinrichtung, insbesondere einem beweglichen Teil oder einem Trägerelement dieser Verbund-Transporteinrichtung, angeordnet werden. Die Verbund-Transporteinrichtung kann insbesondere eine gemeinsame Transporteinrichtung einer Vorrichtung zur Bereitstellung eines Einzellagenverbundes sein. Insgesamt ergibt sich durch das vorgeschlagene Verfahren, insbesondere durch die Korrekturbewegung, eine hochgenaue Positionierung der Einzellage in der gewünschten Endraumlage. Insbesondere kann eine translationsbezogene Positioniergenauigkeit eine Toleranz von maximal 1/10 mm aufweisen. Eine rotationsbezogene Positioniergenauigkeit kann eine solche Toleranz aufweisen, die die Einhaltung der translationsbezogenen Positioniergenauigkeit ermöglicht.

In einer weiteren Ausführungsform erfolgt die Verringerung der Abweichung, also die Korrekturbewegung, während des Transports in die Endraumlage, also oder insbesondere während der Transportbewegung. Dies bedeutet, dass die Korrekturbewegung der Transportbewegung überlagert werden kann. Hierdurch ergibt sich in vorteilhafter Weise ein zeitlich schnelles, jedoch trotzdem lagerichtiges Positionieren der Einzellage. Insbesondere kann die vorhergehend erläuterte Taktfrequenz auch bei einer Lagekorrektur eingehalten werden.

Die Überlagerung der Korrekturbewegung bedeutet, dass die Transportbewegung und die Korrekturbewegung gleichzeitig durch die Einzellage-Transporteinrichtung ausgeführt werden. Es ist jedoch auch vorstellbar, zur Ausführung der Korrekturbewegung die Transportbewegung zu unterbrechen.

Die Korrekturbewegung kann zu Beginn oder zum Ende der Transportbewegung durchgeführt werden. Insbesondere kann die Korrekturbewegung vor dem mechanischen Festlegen bzw. Fixieren in der Soll-Endraumlage durchgeführt werden.

In einer weiteren Ausführungsform wird zur Erfassung einer Ist-Transportraumlage der Transport, insbesondere die Transportbewegung, unterbrochen. Beispielsweise kann der Transport um eine vorbestimmte Zeitdauer unterbrochen werden. Diese Unterbrechungszeitdauer kann derart gewählt werden, dass eine zuverlässige Lageerfassung ermöglicht wird. Insbesondere kann eine zuverlässige optische Lageerfassung ermöglicht werden. Auch ist es vorstellbar, die Unterbrechungszeitdauer derart zu wählen, dass zwar eine optische Erfassung der Einzellage mit einer gewünschten Qualität ermöglicht wird, jedoch während der zeitlich nach der optischen Erfassung erfolgenden rechnerischen Bestimmung der Raumlage die Transportbewegung fortgesetzt wird. Dies kann bedeuten, dass während der Transportbewegung Schritte zur bildbasierten Objektdetektion und zur bildbasierten Bestimmung der Raumlage durchgeführt werden, wobei jedoch keine Transportbewegung während der optischen Erfassung durchgeführt wird. Beispielsweise kann die Unterbrechungszeitdauer einer Belichtungszeitdauer einer Bilderfassungseinrichtung entsprechen oder um ein vorbestimmtes (geringes) Maß länger als diese Belichtungszeitdauer sein.

Die Ist-Transportraumlage kann ein oder mehrere Male während der Transportbewegung erfasst werden.

Allerdings ist es selbstverständlich auch vorstellbar, die Ist-Transportraumlage ohne Unterbrechung des Transports, insbesondere der Transportbewegung, durchzuführen.

Weiter vorgeschlagen wird ein Verfahren zur Bereitstellung eines Einzellagenverbundes aus mindestens zwei Einzellagen. Hierbei wird eine erste Einzellage aus einer Ausgangsraumlage in eine Endraumlage transportiert, wobei eine Ist-Ausgangsraumlage und/oder mindestens eine Ist-Transportraumlage der ersten Einzellage erfasst wird. Weiter wird eine Abweichung der Ist-Ausgangsraumlage von einer Soll-Ausgangsraumlage und/oder eine Abweichung der Ist-Transportraumlage von einer Soll-Transportraumlage bestimmt und verringert, insbesondere minimiert. Weiter wird die erste Einzellage in der Endraumlage in eine Transportrichtung des Einzellagenverbundes transportiert, insbesondere nachdem die erste Einzellage auf, an oder in einer Verbund-Transporteinrichtung angeordnet wurde. Weiter wird eine weitere Einzellage aus einer Ausgangsraumlage in eine Endraumlage transportiert, wobei eine Ist-Ausgangsraumlage und/oder mindestens eine Ist-Transportraumlage der weiteren Einzellage erfasst wird und eine Abweichung der Ist-Ausgangsraumlage von einer Soll-Ausgangsraumlage und/oder eine Abweichung der Ist-Transportraumlage von einer Soll-Transportraumlage bestimmt und verringert, insbesondere minimiert, wird. Weiter wird die weitere Einzellage auf der ersten Einzellage angeordnet. Somit kann eine Raumlage der ersten Einzellage, nachdem diese in der ersten Transportrichtung des Einzellagenverbundes transportiert wurde, der Endraumlage der weiteren Einzellage entsprechen bzw. diese Endraumlage umfassen.

Der Transport einer Einzellage aus der Ausgangsraumlage in die Endraumlage kann mit einer resultierenden Bewegung erfolgen, die, wie vorhergehend erläutert, sowohl die Transport- als auch die Korrekturbewegung umfasst.

Das Verfahren ist hierbei insbesondere mittels einer Vorrichtung zur Bereitstellung eines Einzellagenverbundes gemäß einer der in dieser Erfindung beschriebenen Ausführungsformen durchführbar.

Die Transportrichtung des Einzellagenverbundes kann eine Transportrichtung einer gemeinsamen Verbund-Transporteinrichtung sein. Entlang dieser Transportrichtung des Einzellagenverbundes können voneinander verschiedene Aufnahme-Raumlagen angeordnet sein. Diese können den Endraumlagen von Einzellagen entsprechen, die durch verschiedene Vorrichtung zur Positionierung von Einzellagen in diese Endraumlagen transportiert werden können.

Wie vorhergehend bereits erläutert, kann auch dieses Verfahren zur Bereitstellung eines Einzellagenverbundes mit einem getakteten Betrieb durchgeführt werden. Hierbei kann in einem Takt ein Transport einer auf, an oder in der gemeinsamen Verbund-Transporteinrichtung angeordneten ersten Einzellage um eine vorbestimmte Strecke entlang der Transportrichtung des Einzellagenverbundes erfolgen sowie die weitere Einzellage auf der ersten Einzellage angeordnet werden. Hiernach kann der nächste Takt folgen. Die Strecke, die entlang der Transportrichtung des Einzellagenverbundes zurückgelegt wird, kann hierbei an eine Distanz zwischen zwei in Transportrichtung des Einzellagenverbundes benachbarten Vorrichtungen zur Positionierung einer Einzellage gemäß einer der in dieser Erfindung beschriebenen Ausführungsformen angepasst sein.

Nach Anordnung der letzten Einzellage auf dem Einzellagenverbund kann eine Fixierung der Einzellagen aneinander erfolgen.

Die Erfindung wird anhand eines Ausführungsbeispiels näher erläutert. Die Figuren zeigen:
- Fig. 1: eine schematische Draufsicht auf eine Vorrichtung zur Bereitstellung eines Einzellagenverbundes in einer ersten Ausführungsform und
- Fig. 2: einen schematischen Längsschnitt durch eine Vorrichtung zur Bereitstellung eines Einzellagenverbundes in einer weiteren Ausführungsform.

Nachfolgend bezeichnen gleiche Bezugszeichen Elemente mit gleichen oder ähnlichen technischen Merkmalen.

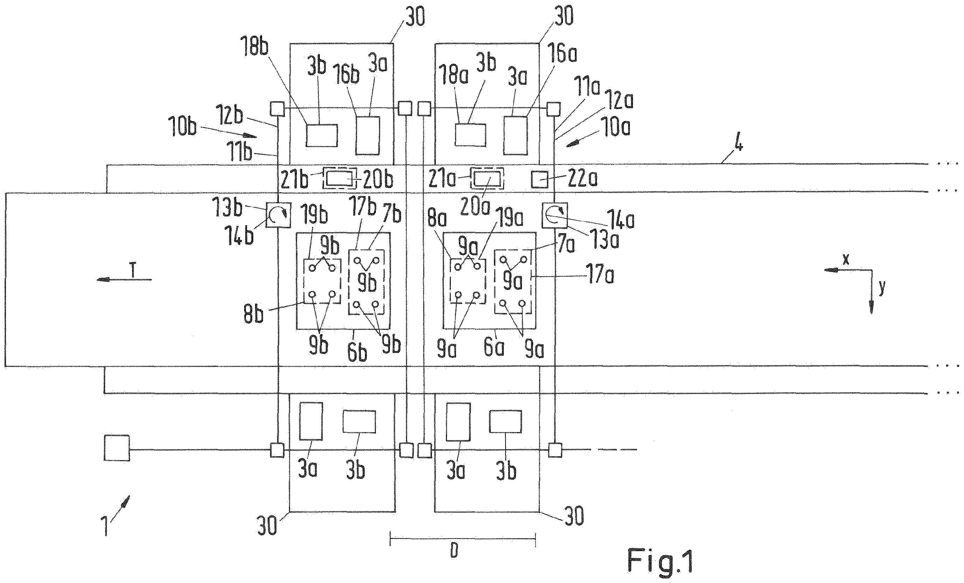

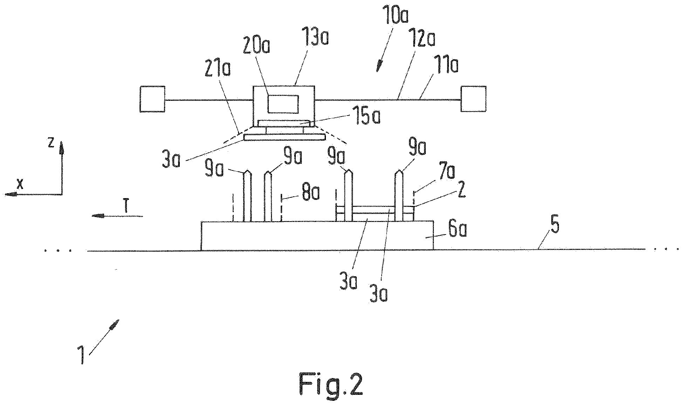

Fig. 1 zeigt eine schematische Draufsicht auf eine Vorrichtung 1 zur Bereitstellung eines Einzellagenverbundes 2 (siehe Fig. 2). Die Vorrichtung 1 zur Bereitstellung umfasst eine erste Vorrichtung 10a zur Positionierung einer Einzellage 3a, 3b. Eine IDE3-Einzellage 3a kann ein ID3-Format aufweisen, eine ID1-Einzellage 3b kann ein ID1-Format aufweisen.

Weiter umfasst die Vorrichtung 1 zur Bereitstellung eine weitere Vorrichtung 10b zur Positionierung einer Einzellage 3a, 3b.

Weiter dargestellt ist ein Referenzkoordinatensystem, welches eine erste Raumachse x (Längsachse), eine zweite Raumachse y (Querachse) und eine dritte Raumachse z (siehe Fig. 2) (Vertikalachse) aufweist. Die korrespondierenden Raumrichtungen sind durch Pfeile der Raumachsen x, y, z dargestellt. Entlang der ersten Raumrichtung (x-Richtung) ist die weitere Vorrichtung 10b zur Positionierung nach oder hinter der ersten Vorrichtung 10a zur Positionierung angeordnet. Die Vertikalrichtung kann hierbei entgegen einer Gravitationsrichtung orientiert sein, wobei die Gravitationsrichtung die Richtung der wirkenden Gravitationskraft bezeichnet. In Fig. 2 ist dargestellt, dass die dritte Raumrichtung von unten nach oben orientiert ist, wenn sie entgegen der Gravitationsrichtung orientiert ist.

Die nachfolgenden Ausführungen beziehen sich auf die erste Vorrichtung 10a zur Positionierung. Die erste Vorrichtung 10a zur Positionierung umfasst eine Transporteinrichtung 11a, die eine Führungseinrichtung 12a und einen Schlitten 13a umfasst. Der Schlitten 13a ist hierbei in und entgegen aller Raumrichtungen des Referenzkoordinatensystems bewegbar. Somit kann der Schlitten 13a Translationsbewegungen entlang der Raumachsen x, y, z ausführen. Zusätzlich kann der Schlitten 13a eine Rotationsbewegung, die durch einen Pfeil 14a angedeutet ist, um eine Rotationsachse ausführen, die parallel zur dritten Raumachse verläuft.

An dem Schlitten 13a der Transporteinrichtung 11a der ersten Vorrichtung 10a zur Positionierung ist eine Vakuumgreifereinrichtung 15a angeordnet, mit der eine Einzellage 3a, 3b mechanisch gegriffen werden kann. Mittels der Transporteinrichtung 11a ist z.B. die ID3-Einzellage 3a aus einer ID3-Ausgangsraumlage 16a in eine ID3-Endraumlage 17a transportierbar. Entsprechend ist die ID1-Einzellage 3b aus einer ID1-Ausgangsraumlage 18a in eine ID1-Endraumlage 19a transportierbar. Hierzu kann die entsprechende Einzellage 3a, 3b in der Ausgangsraumlage 16a, 18a durch die Greifereinrichtung 15a gegriffen und in einer Transportbewegung in die oder hin zu der entsprechenden Endraumlage 17a, 19a gebracht werden. Während der Transportbewegung kann der Schlitten 13a nur Translationsbewegungen ausführen. Dies bedeutet, dass die Transportbewegung nur einen Translationsanteil und keinen Rotationsanteil umfasst.

Weiter dargestellt ist, dass die erste Vorrichtung 10a eine Lageerfassungseinrichtung 20a umfasst, wobei mittels der Lageerfassungseinrichtung 20a eine Ist-Transportraumlage einer Einzellage 3a, 3b erfassbar ist, wenn diese während der Transportbewegung in einem Erfassungsbereich 21a der Lageerfassungseinrichtung 10a angeordnet ist. Die Lageerfassungseinrichtung 21a kann hierbei derart angeordnet sein, dass eine durch die erste Transporteinrichtung 11a in einer Transportbewegung transportierte Einzellage 3a, 3b durch den Erfassungsbereich 21a transportiert wird. Alternativ kann auch eine Lageerfassungseinrichtung vorgesehen sein, die eine Ist-Ausgangsraumlage der Einzellage 3a, 3b erfassen kann.

Weiter umfasst die erste Vorrichtung 10a zur Positionierung eine Auswerte- und Steuereinrichtung 22a. Mittels dieser Auswerte- und Steuereinrichtung 22a kann eine Abweichung der Ist-Transportraumlage von einer vorbekannten Soll-Transportraumlage bestimmt werden. Hierzu kann die Auswerte- und Steuereinrichtung die Ist-Transportraumlage der Einzellage 3a, 3b im Referenzkoordinatensystem bestimmen und mit einer vorbekannten Soll-Transportraumlage vergleichen, die einer aktuellen Raumlage des Schlittens 13a zugeordnet ist. Z.B. durch Kalibrationsverfahren oder Vorversuche kann ermittelt werden, welche gewünschte Soll-Raumlage ein durch die Greifereinrichtung 15a gegriffene Einzellage 3a, 3b in einer bestimmten Raumlage des Schlittens 13a, insbesondere an einer bestimmten Raumposition des Schlittens 13a, haben soll. In einer Korrekturbewegung des Schlittens 14a, welche sowohl einen Translationsanteil als auch einen Rotationsanteil umfassen kann, wird die Abweichung der Ist-Transportraumlage von der Soll-Transportraumlage reduziert.

Die Korrekturbewegung kann hierbei zeitgleich zur Transportbewegung durchgeführt werden.

Die Transportbewegung kann hierbei eine festgelegte Trajektorie aufweisen. Die festgelegte Trajektorie kann hierbei derart gegeben sein, dass eine Einzellage 3a, 3b, die in einer Soll-Ausgangsraumlage angeordnet ist, in die Soll-Endraumlage transportiert wird, wenn keine weiteren ungewünschten Lageänderungen während des Transports auftreten. In einem solchen Fall wäre also keine Korrekturbewegung notwendig.

Es ist möglich, dass die Lageerfassungseinrichtung 20a eine Bilderfassungseinrichtung, insbesondere einen COMS-Sensor oder einen CCD-Sensor, umfasst. In diesem Fall kann zur Bilderfassung die Transportbewegung unterbrochen werden, wenn sich die Einzellage 3a, 3b in dem Erfassungsbereich 21a der Lageerfassungseinrichtung befindet.

Die vorhergehenden Ausführungen beziehen sich auf die erste Vorrichtung 10a zur Positionierung. Die weitere Vorrichtung 10b zur Positionierung einer weiteren Einzellage 3a, 3b ist hierbei entsprechend der ersten Vorrichtung 10a zur Positionierung einer Einzellage ausgebildet. Somit kann vollumfänglich auf die entsprechenden Ausführungen zur ersten Vorrichtung 10a verwiesen werden, wobei die Bezugszeichen von einander entsprechenden Bestandteilen der Vorrichtungen 10a, 10b den gleichen numerischen Wert aufweisen, jedoch für die erste Vorrichtung 10a mit einem "a" an letzter Stelle und für die weitere Vorrichtung 10b mit einem "b" an letzter Stelle gekennzeichnet sind.

Beispielsweise umfasst die weitere Vorrichtung 10b zur Positionierung einer weiteren Einzellage 3a, 3b eine Transporteinrichtung 11b, die entsprechend den Ausführungen zur Transporteinrichtung 11a der ersten Vorrichtung 10a zur Positionierung ausgebildet ist.

Weiter ist in Fig. 1 eine gemeinsame Verbund-Transporteinrichtung 4 mit einem Transportband 5 dargestellt, welches in und entgegen einer Transportrichtung T des Einzellagenverbundes 2 (siehe Fig. 2) bewegbar ist. Auf dem Transportband 5 ist eine erste Trägerplatte 6a und eine weitere Trägerplatte 6b angeordnet. Auf einer Oberfläche der ersten Trägerplatte 6a ist ein Aufnahmebereich 7a für eine ID3-Einzellage 3a und ein weiterer Aufnahmebereich 8a für eine ID1-Einzellage 3b vorgesehen. Entsprechend sind auf einer Oberfläche der weiteren Trägerplatte 6b ein erster Aufnahmebereich 7b für eine ID3-Einzellage 3a und ein weiterer Aufnahmebereich 8b für eine ID1-Einzellage 3b vorgesehen. In Fig. 1 ist dargestellt, dass die erste Trägerplatte 6a mittels dem Transportband 5 derart angeordnet ist, dass der erste Aufnahmebereich 7a die Endraumlage 17a für eine ID3-Einzellage 3a umfasst, welche mittels der ersten Vorrichtung 10a zur Positionierung in dieser Endraumlage 17a positioniert werden kann. Entsprechend umfasst der erste Aufnahmebereich 17b der weiteren Trägerplatte 6b die Endraumlage 17b für eine ID3-Einzellage 3a, die mittels der weiteren Vorrichtung 10b zur Positionierung in dieser Endraumlage 17b positionierbar ist.

Somit sind der erste Aufnahmebereich 7a und auch der weitere Aufnahmebereich 8a der ersten Trägerplatte 6a im Arbeitsbereich der Transporteinrichtung 11a der ersten Vorrichtung 10a zur Positionierung angeordnet. Weiter sind der erste Aufnahmebereich 7b und auch der weitere Aufnahmebereich 8b der weiteren Trägerplatte 6b im Arbeitsbereich der Transporteinrichtung 11b der weiteren Vorrichtung 10b zur Positionierung angeordnet.

Während eines Taktes in einem Verfahren zur Herstellung des Einzellagenverbundes 2 kann beispielsweise eine ID3-Einzellage 3a mittels der ersten Transporteinrichtung 11a mit einer Transport- und Korrekturbewegung in der gewünschten Endraumlage 7a in dem ersten Aufnahmebereich 17a der ersten Trägerplatte 6a angeordnet werden. Nach dem Positionieren der ID3-Einzellage 3a auf der ersten Trägerplatte 6a kann diese in dem Takt um eine vorbestimmte Distanz D in Transportrichtung T des Einzellagenverbundes 2 weiter transportiert werden. Hiernach ist die erste Trägerplatte 6a in der (vormaligen) Lage der weiteren Trägerplatte 6b angeordnet. Ebenfalls ist der erste und weitere Aufnahmebereich 7a, 8a der ersten Trägerplatte 6a nunmehr im Arbeitsraum der Transporteinrichtung 11b der weiteren Vorrichtung 10b zur Positionierung angeordnet.

Dann kann in einem weiteren Takt mittels der weiteren Vorrichtung 10b zur Positionierung eine weitere ID3-Einzellage 3a in dem ersten Aufnahmebereich 17a der ersten Trägerplatte 6a und somit auf der bereits darin angeordneten ID3-Einzellage 3a angeordnet werden. Somit ist eine getaktete Herstellung eines Einzellagenverbundes 2 möglich.

In Fig. 1 sind weiter Befestigungsdornen 9a, 9b der Trägerplatten 6a, 6b dargestellt. Während der Transportbewegung bzw. der resultierenden Bewegung, insbesondere in einem zeitlich letzten Abschnitt der Transportbewegung bzw. der resultierenden Bewegung wird eine Einzellage 3a, 3b auf die Dornen aufgesteckt und somit im jeweiligen Aufnahmebereich 7a, 7b, 8a, 8b in der entsprechenden Raumlage mechanisch festgelegt. Dies stellt sicher, dass sich eine Position und Ausrichtung einer in dem Aufnahmebereich 7a, 8a, 7b, 8b angeordneten Einzellage 3a, 3b relativ zur Trägerplatte 6a, 6b während eines Transports der Trägerplatte 6a, 6b nicht verändert. Dies wiederum ermöglicht die lagerichtige Anordnung von weiteren Einzellagen auf bereits im Aufnahmebereich 7a, 7b, 8a, 8b angeordneten Einzellagen.

Weiter dargestellt sind Vorrichtungen 30 zur Bereitstellung der Einzellagen 3a, 3b. Diese sind mechanisch an der gemeinsamen Verbund-Transporteinrichtung 4 befestigt. Durch die Bereitstellungseinrichtungen 30 können die Einzellagen 3a, 3b in der jeweiligen Ausgangsraumlage 16a, 16b, 18a, 18b bereitgestellt werden. Insbesondere können die Bereitstellungseinrichtungen Bereitstellungsbereiche aufweisen, in denen eine bereits vereinzelte Einzellage 3a, 3b mit ID3-Format oder ID1-Format für die Positionierung bereitgestellt werden kann.

Fig. 2 zeigt einen schematischen Längsschnitt durch einen Teil einer Vorrichtung 1 zur Bereitstellung eines Einzellagenverbundes 2. Im Unterschied zu der in Fig. 1 dargestellten Ausführungsform ist die Lageerfassungseinrichtung 20a an einem beweglichen Teil, insbesondere an dem Schlitten 13a, der Transporteinrichtung 11a angeordnet. Dies ermöglicht theoretisch eine kontinuierliche Erfassung einer Ist-Transportraumlage der Einzellage 3a, 3b, wobei ein Erfassungsbereich 21a durch Strichlinien angedeutet ist.

Weiter dargestellt ist, dass im ersten Aufnahmebereich 7a einer ersten Trägerplatte 6a bereits zwei ID3-Einzellagen 3a angeordnet sind. Mittels der Transporteinrichtung 11a wird eine weitere Einzellage 3a in den ersten Aufnahmebereich 7a transportiert und auf der obersten Einzellage 3a angeordnet. Auch dargestellt sind Befestigungsdornen 9a, die die Raumlage der im ersten Aufnahmebereich 7a angeordneten Einzellagen 3a festlegen.

### Bezugszeichenliste

- 1: Vorrichtung zur Bereitstellung eines Einzellagenverbundes
- 2: Einzellagenverbund
- 3a: ID3-Einzellage
- 3b: ID1-Einzellage
- 4: gemeinsame Verbund-Transporteinrichtung
- 5: Transportband
- 6a: erste Trägerplatte
- 6b: weitere Trägerplatte
- 7a: erster Aufnahmebereich der ersten Trägerplatte
- 7b: erster Aufnahmebereich der weiteren Trägerplatte
- 8a: weiterer Aufnahmebereich der ersten Trägerplatte
- 8b: weiterer Aufnahmebereich der weiteren Trägerplatte
- 9a: Befestigungsdorn der ersten Trägerplatte
- 9b: Befestigungsdorn der weiteren Trägerplatte
- 10a: erste Vorrichtung zur Positionierung einer Einzellage
- 10b: weitere Vorrichtung zur Positionierung einer Einzellage
- 11a, 11b: Transporteinrichtung
- 12a, 12b: Führungseinrichtung
- 13a, 13b: Schlitten
- 14a, 14b: Pfeil
- 15a: Greifereinrichtung
- 16a, 16b: Ausgangsraumlage für eine ID3-Einzellage
- 17a, 17b: Endraumlage für eine ID3-Einzellage
- 18a, 18b: Ausgangsraumlage für eine ID1-Einzellage
- 19a, 19b: Endraumlage für eine ID1-Einzellage
- 20a, 20b: Lageerfassungseinrichtung
- 21a, 21b: Erfassungsbereich
- 30: Bereitstellungseinrichtung
- x: erste Raumachse
- y: zweite Raumachse
- z: dritte Raumachse
- D: Distanz
- T: Transportrichtung

## Patentansprüche

1. Vorrichtung zur Positionierung zumindest einer Einzellage (3a, 3b) eines Wert- oder Sicherheitsdokuments, wobei die Vorrichtung (10a, 10b) mindestens eine Transporteinrichtung (11a, 11b) zum Transport der mindestens eine Einzellage (3a, 3b) aus einer Ausgangsraumlage (16a, 16b, 18a, 18b) in eine Endraumlage (17a, 17b, 19a, 19b) umfasst, wobei die Vorrichtung (10a, 10b) mindestens eine Lageerfassungseinrichtung (20a, 20b) zur Erfassung der Ist-Ausgangsraumlage und/oder mindestens einer Ist-Transportraumlage der mindestens einen Einzellage (3a, 3b) umfasst, wobei die Vorrichtung (10a, 10b) mindestens eine Auswerte- und Steuereinrichtung (22a, 22b) umfasst, wobei mittels der Auswerte- und Steuereinrichtung (22a, 22b) eine Abweichung der Ist-Ausgangsraumlage von einer Soll-Ausgangsraumlage und/oder eine Abweichung der mindestens einen Ist-Transportraumlage von einer korrespondierenden Soll-Transportraumlage bestimmbar und die mindestens eine Transporteinrichtung (11a, 11b) derart steuerbar ist, dass die Abweichung der Ist-Ausgangsraumlage von der Soll-Ausgangsraumlage und/oder die Abweichung der Ist-Transportraumlage von der Soll-Transportraumlage verringert wird, wobei durch die mindestens eine Transporteinrichtung (11a, 11b) eine Veränderung der Position und der Ausrichtung der Einzellage (3a, 3b) durchführbar ist,
**dadurch gekennzeichnet, dass**
die Position der Einzellage in einer von der Transporteinrichtung durchführbaren Korrektur-Translationsbewegung zur Verringerung der Abweichung entlang drei rechtwinklig zueinander orientierten Raumrichtungen veränderbar ist.

2. Vorrichtung nach einem der Anspruch 1, **dadurch gekennzeichnet, dass** die mindestens eine Lageerfassungseinrichtung (20a, 20b) eine optische Lageerfassungseinrichtung ist.

3. Vorrichtung nach einem der Anspruch 1 oder 2, **dadurch gekennzeichnet, dass** zumindest ein Teil der mindestens einen Lageerfassungseinrichtung in oder an einem beweglichen Teil der Transporteinrichtung (11a, 11b) angeordnet ist.

4. Vorrichtung nach einem der Anspruch 1 bis 3, **dadurch gekennzeichnet, dass** die Vorrichtung mindestens eine Verbund-Transporteinrichtung (4) zum Transport der mindestens einen Einzellage (3a, 3b) nach der Positionierung in der Endraumlage (17a, 17b, 19a, 19b) umfasst.

5. Vorrichtung nach Anspruch 4, **dadurch gekennzeichnet, dass** die Verbund-Transporteinrichtung (4) mindestens ein Trägerelement umfasst, wobei die mindestens eine Einzellage (3a, 3b) in der Endraumlage (17a, 17b, 19a, 19b) auf, an oder in dem mindestens einen Trägerelement anordenbar ist.

6. Vorrichtung nach Anspruch 4 oder 5, **dadurch gekennzeichnet, dass** die Verbund-Transporteinrichtung (4) und/oder das Trägerelement mindestens ein Befestigungsmittel zur Festlegung der Einzellage (3a, 3b) in der Endraumlage (17a, 17b, 19a, 19b) umfasst.

7. Vorrichtung nach einem der Anspruch 1 bis 6, **dadurch gekennzeichnet, dass** die Vorrichtung (10a, 10b) mindestens eine Bereitstellungseinrichtung (30) zur Bereitstellung der mindestens einen Einzellage (3a, 3b) in der Ausgangsraumlage (16a, 16b, 18a, 18b) umfasst.

8. Vorrichtung nach einem der Anspruch 1 bis 7, **dadurch gekennzeichnet, dass** die Vorrichtung (10a, 10b) mindestens ein Mittel zum Ausbilden mindestens eines Festlegungsmittels an der mindestens einen Einzellage (3a, 3b) zur Festlegung in der Endraumlage (17a, 17b, 19a, 19b) umfasst, wobei das mindestens eine Festlegungsmittel an der mindestens einen Einzellage (3a, 3b) zur Wechselwirkung mit einem Befestigungsmittel zur Festlegung der Einzellage (3a, 3b) in der Endraumlage (17a, 17b, 19a, 19b) vorgesehen ist.

9. Vorrichtung zur Bereitstellung eines Einzellagenverbundes (2) aus mindestens zwei Einzellagen (3a, 3b), wobei die Vorrichtung (1) eine erste Vorrichtung (10a) gemäß einem der Ansprüche 1 bis 8 und mindestens eine weitere Vorrichtung (10b) gemäß einem der Ansprüche 1 bis 8 umfasst, wobei die mindestens eine weitere Vorrichtung (10b) entlang einer Transportrichtung (T) des Einzellagenverbundes (2) nach der ersten Vorrichtung (10a) angeordnet ist.

10. Vorrichtung nach Anspruch 9, **dadurch gekennzeichnet, dass** Vorrichtung (1) zusätzlich eine Fixierungseinrichtung zur Festlegung der Einzellagen (3a, 3b) aneinander aufweist.

11. Verfahren zur Positionierung zumindest einer Einzellage(3a, 3b) eines Wert- oder Sicherheitsdokuments mittels einer Vorrichtung gemäß einer der Ansprüche 1 bis 8, wobei mindestens eine Einzellage (3a, 3b) aus einer Ausgangsraumlage (16a, 16b, 18a, 18b) in eine Endraumlage (17a, 17b, 19a, 19b) transportiert wird, wobei eine Ist-Ausgangsraumlage und/oder mindestens eine Ist-Transportraumlage der mindestens einen Einzellage (3a, 3b) erfasst wird, wobei eine Abweichung der Ist-Ausgangsraumlage von einer Soll-Ausgangsraumlage und/oder eine Abweichung der Ist-Transportraumlage von einer Soll-Transportraumlage bestimmt und verringert wird.

12. Verfahren nach Anspruch 11, **dadurch gekennzeichnet, dass** die Verringerung der Abweichung während des Transports in die Endraumlage erfolgt.

13. Verfahren nach Anspruch 11 oder 12, **dadurch gekennzeichnet, dass** zur Erfassung einer Ist-Transportraumlage der Transport unterbrochen wird.

14. Verfahren zur Bereitstellung eines Einzellagenverbunds (2) aus mindestens zwei Einzellagen (3a, 3b) mittels einer Vorrichtung gemäß einer der Ansprüche 9 bis 10, wobei eine erste Einzellage (3a, 3b) aus einer Ausgangsraumlage (16a, 18a) in eine Endraumlage (17a, 19a) transportiert wird, wobei eine Ist-Ausgangsraumlage und/oder mindestens eine Ist-Transportraumlage der ersten Einzellage (3a, 3b) erfasst wird, wobei eine Abweichung der Ist-Ausgangsraumlage von einer Soll-Ausgangsraumlage und/oder eine Abweichung der Ist-Transportraumlage von einer Soll-Transportraumlage bestimmt und verringert wird, wobei die erste Einzellage (3a, 3b) in der Endraumlage (17a, 19a) in eine Transportrichtung (T) des Einzellagenverbundes (2) transportiert wird, wobei eine weitere Einzellage (3a, 3b) aus einer Ausgangsraumlage (16b, 18b) in eine Endraumlage (17b, 19b) transportiert wird, wobei eine Ist-Ausgangsraumlage und/oder mindestens eine Ist-Transportraumlage der weiteren Einzellage (3a, 3b) erfasst wird, wobei eine Abweichung der Ist-Ausgangsraumlage von einer Soll-Ausgangsraumlage und/oder eine Abweichung der Ist-Transportraumlage von einer Soll-Transportraumlage bestimmt und verringert wird.

## Claims

1. Device for positioning at least one individual layer (3a, 3b) of a value or security document, wherein the device (10a, 10b) comprises at least one transport device (11a, 11b) for transporting the at least one individual layer (3a, 3b) out of a starting spatial position (16a, 16b, 18a, 18b) into a final spatial position (17a, 17b, 19a, 19b), wherein the device (10a, 10b) comprises at least one position detecting device (20a, 20b) for detecting the actual starting spatial position and/or at least one actual transport spatial position of the at least one individual layer (3a, 3b) wherein the device (10a, 10b) comprises at least one evaluation and control device (22a, 22b), wherein by means of the evaluation and control device (22a, 22b) a deviation of the actual starting spatial position from a setpoint starting spatial position and/or a deviation of the at least one actual transport spatial position from a corresponding setpoint transport spatial position can be determined and the at least one transport device (11a, 11b) can be controlled in such a way that the deviation of the actual starting spatial position from the setpoint transport spatial position and/or the deviation of the actual transport spatial position from the setpoint transport spatial position is reduced, wherein, by means of the at least one transport device (11a, 11b), a change can be carried out in the position and alignment of the individual layer (3a, 3b),
**characterised in that**
the position of the individual layer can be changed in a correction-translation movement which can be carried out by the transport device, in order to reduce the deviation along three spatial directions oriented at right angles to one another.

2. Device according to claim 1, **characterised in that** the at least one position detecting device (20a, 20b) is an optical position detecting device.

3. Device according to any one of claims 1 or 2, **characterised in that** at least a part of the at least one position detecting device is arranged in or at a moving part of the transport device (11a, 11b).

4. Device according to any one of claims 1 to 3, **characterised in that** the device comprises at least one composite transport device (4) for transporting the at least one individual layer (3a,3b) after the positioning in the final spatial position (17a, 17b, 19a, 19b).

5. Device according to claim 4, **characterised in that** the composite transport device (4) comprises at least one carrier element, wherein the at least one individual layer (3a, 3b) in the final spatial position (17a, 17b, 19a, 19b), can be arranged on, at, or in the at least one carrier element.

6. Device according to any one of claims 4 or 5, **characterised in that** the composite transport device (4) and/or the carrier element comprises at least one securing means for securing the individual layer (3a, 3b) in the final spatial position (17a, 17b, 19a, 19b).

7. Device according to any one of claims 1 to 6, **characterised in that** the device (10a, 10b) comprises at least one provision device (30) for providing the at least one individual layer (3a, 3b) in the starting spatial position (16a, 16b, 18a, 18b).

8. Device according to any one of claims 1 to 7, **characterised in that** the device (10a, 10b) comprises at least one means for the formation of at least one securing means at the at least one individual layer (3a, 3b) for securing it in the final spatial position (17a, 17b, 19a, 19b), wherein the at least one securing means is provided at the at least one individual layer (3a, 3b) for a reciprocal effect with a securing means for securing the individual layer (3a, 3b) in the final spatial position (17a, 17b, 19a, 19b).

9. Device for providing an individual layer composite (2) of at least two individual layers (3a, 3b), wherein the device (1) comprises a first device (10a) according to any one of claims 1 to 8 and at least one further device (10b) according to any one of claims 1 to 8, wherein the at least one further device (10b) is arranged along a transport direction (T) of the individual layer composite (2) after the first device (10a).

10. Device according to claim 9, **characterised in that** the device (1) additionally comprises a fixing device for securing the individual layers (3a, 3b) to one another.

11. Method for positioning at least one individual layer (3a, 3b) of a value or security document by means of a device according to any one of claims 1 to 8, wherein at least one individual layer (3a, 3b) is transported out of a starting spatial position (16a, 16b, 18a, 18b) into a final spatial position (17a, 17b, 19a, 19b), wherein an actual starting spatial position and/or at least one actual transport spatial position of the at least one individual layer (3a, 3b) is detected, wherein a deviation of the actual starting spatial position from a setpoint starting spatial position and/or a deviation of the actual transport spatial position from a setpoint transport spatial position is determined and reduced.

12. Method according to claim 11, **characterised in that** the reduction of the deviation takes place during the transport into the final spatial position.

13. Method according to claim 11 or 12, **characterised in that**, for the determination of an actual transport spatial position, the transport is interrupted.

14. Method for the provision of an individual layer composite (2) from at least two individual layers (3a, 3b) by means of a device according to any one of claims 9 to 10, wherein a first individual layer (3a, 3b) is transported out of a starting spatial position (16a, 18a) into a final spatial position (17a, 19a), wherein an actual starting spatial position and/or at least one actual transport spatial position of the first individual layer (3a, 3b) is detected, wherein a deviation of the actual starting spatial position from a setpoint starting spatial position and/or a deviation of the actual transport spatial position from a setpoint transport spatial position is determined and reduced, wherein the first individual layer (3a, 3b) in the final spatial position (17a, 19a) is transported in a transport direction (T) of the individual layer composite (2), wherein a further individual layer (3a, 3b) is transported out of a starting spatial position (16b, 18b) into a final spatial position (17b, 19b), wherein an actual starting spatial position and/or at least one actual transport spatial position of the further individual layer (3a, 3b) is detected, wherein a deviation of the actual starting spatial position from a setpoint starting spatial position and/or a deviation of the actual transport spatial position from a setpoint transport spatial position is determined and reduced.

## Revendications

1. Dispositif pour positionner au moins une feuille individuelle (3a, 3b) d'un document de valeur ou de sécurité, dans lequel le dispositif (10a, 10b) comprend au moins un dispositif de transport (11a, 11b) pour le transport de l'au moins une feuille individuelle (3a, 3b) d'une position spatiale initiale (16a, 16b, 18a, 18b) à une position spatiale finale (17a, 17b, 19a, 19b), dans lequel le dispositif (10a, 10b) comprend au moins un dispositif de détection de position (20a, 20b) pour la détection de la position spatiale initiale réelle et/ou d'au moins une position spatiale de transport réelle de l'au moins une feuille individuelle (3a, 3b), dans lequel le dispositif (10a, 10b) comprend au moins un dispositif d'évaluation et de commande (22a, 22b), dans lequel au moyen du dispositif d'évaluation et de commande (22a, 22b), un écart de la position spatiale initiale réelle d'une position spatiale initiale de consigne et/ou un écart de l'au moins une position spatiale de transport réelle d'une position spatiale de transport de consigne correspondante peut être déterminé et l'au moins un dispositif de transport (11a, 11b) peut être commandé de sorte que l'écart de la position spatiale initiale réelle de la position spatiale initiale de consigne et/ou l'écart de la position spatiale de transport réelle de la position spatiale de transport de consigne est réduit, dans lequel une modification de la position et de l'orientation de la feuille individuelle (3a, 3b) peut être effectuée par l'au moins un dispositif de transport (11a, 11b),
**caractérisé en ce que**
la position de la feuille individuelle est modifiable dans un mouvement de translation de correction pouvant être effectué par le dispositif de transport pour la réduction de l'écart le long de trois directions spatiales orientées en angle droit les unes par rapport aux autres.

2. Dispositif selon l'une quelconque des revendications 1, **caractérisé en ce que** l'au moins un dispositif de détection de position (20a, 20b) est un dispositif de détection de position optique.

3. Dispositif selon l'une quelconque des revendications 1 ou 2, **caractérisé en ce qu'**au moins une partie de l'au moins un dispositif de détection de position est agencée dans ou au niveau d'une partie mobile du dispositif de transport (11a, 11b).

4. Dispositif selon l'une quelconque des revendications 1 à 3, **caractérisé en ce que** le dispositif comprend au moins un dispositif de transport d'ensemble (4) pour le transport de l'au moins une feuille individuelle (3a, 3b) après le positionnement dans la position spatiale finale (17a, 17b, 19a, 19b).

5. Dispositif selon la revendication 4, **caractérisé en ce que** le dispositif de transport d'ensemble (4) comprend au moins un élément porteur, dans lequel l'au moins une feuille individuelle (3a, 3b) peut être agencée dans la position spatiale finale (17a, 17b, 19a, 19b) sur, au niveau de ou dans l'au moins un élément porteur.

6. Dispositif selon la revendication 4 ou 5, **caractérisé en ce que** le dispositif de transport d'ensemble (4) et/ou l'élément porteur comprend au moins un moyen de fixation pour l'immobilisation de la feuille individuelle (3a, 3b) dans la position spatiale finale (17a, 17b, 19a, 19b).

7. Dispositif selon l'une quelconque des revendications 1 à 6, **caractérisé en ce que** le dispositif (10a, 10b) comprend au moins un dispositif de fourniture (30) pour la fourniture de l'au moins une feuille individuelle (3a, 3b) dans la position spatiale initiale (16a, 16b, 18a, 18b) .

8. Dispositif selon l'une quelconque des revendications 1 à 7, **caractérisé en ce que** le dispositif (10a, 10b) comprend au moins un moyen de formation d'au moins un moyen d'immobilisation au niveau de l'au moins une feuille individuelle (3a, 3b) pour l'immobilisation dans la position spatiale finale (17a, 17b, 19a, 19b), dans lequel l'au moins un moyen d'immobilisation est prévu au niveau de l'au moins une feuille individuelle (3a, 3b) pour l'interaction avec un moyen de fixation pour l'immobilisation de la feuille individuelle (3a, 3b) dans la position spatiale finale (17a, 17b, 19a, 19b).

9. Dispositif pour fournir un ensemble de feuilles individuelles (2) d'au moins deux feuilles individuelles (3a, 3b), dans lequel le dispositif (1) comprend un premier dispositif (10a) selon l'une quelconque des revendications 1 à 8 et au moins un autre dispositif (10b) selon l'une quelconque des revendications 1 à 8, dans lequel l'au moins un autre dispositif (10b) est agencé le long d'une direction de transport (T) de l'ensemble de feuilles individuelles (2) après le premier dispositif (10a).

10. Dispositif selon la revendication 9, **caractérisé en ce que** le dispositif (1) présente en plus un dispositif de fixation pour l'immobilisation des feuilles individuelles (3a, 3b) les unes contre les autres.

11. Procédé pour positionner au moins une feuille individuelle (3a, 3b) d'un document de valeur ou de sécurité au moyen d'un dispositif selon l'une quelconque des revendications 1 à 8, dans lequel au moins une feuille individuelle (3a, 3b) est transportée d'une position spatiale initiale (16a, 16b, 18a, 18b) à une position spatiale finale (17a, 17b, 19a, 19b), dans lequel une position spatiale initiale réelle et/ou au moins une position spatiale de transport réelle de l'au moins une feuille individuelle (3a, 3b) est détectée, dans lequel un écart de la position spatiale initiale réelle d'une position spatiale initiale de consigne et/ou un écart de la position spatiale de transport réelle d'une position spatiale de transport de consigne est déterminé et réduit.

12. Procédé selon la revendication 11, **caractérisé en ce que** la réduction de l'écart a lieu pendant le transport dans la position spatiale finale.

13. Procédé selon la revendication 11 ou 12, **caractérisé en ce que** le transport est interrompu pour la détection d'une position spatiale de transport réelle.

14. Procédé pour fournir un ensemble de feuilles individuelles (2) d'au moins deux feuilles individuelles (3a, 3b) au moyen d'un dispositif selon l'une quelconque des revendications 9 à 10, dans lequel une première feuille individuelle (3a, 3b) est transportée d'une position spatiale initiale (16a, 18a) à une position spatiale finale (17a, 19a), dans lequel une position spatiale initiale réelle et/ou au moins une position spatiale de transport réelle de la première feuille individuelle (3a, 3b) est détectée, dans lequel un écart de la position spatiale initiale réelle d'une position spatiale initiale de consigne et/ou un écart de la position spatiale de transport réelle d'une position spatiale de transport de consigne est déterminé et réduit, dans lequel la première feuille individuelle (3a, 3b) est transportée dans la position spatiale finale (17a, 19a) dans un dispositif de transport (T) de l'ensemble de feuilles individuelles (2), dans lequel une autre feuille individuelle (3a, 3b) est transportée d'une position spatiale initiale (16b, 18b) à une position spatiale finale (17b, 19b), dans lequel une position spatiale initiale réelle et/ou au moins une position spatiale de transport réelle de l'autre feuille individuelle (3a, 3b) est détectée, dans lequel un écart de la position spatiale initiale réelle d'une position spatiale initiale de consigne et/ou un écart de la position spatiale de transport réelle d'une position spatiale de transport de consigne est déterminé et réduit.
